# EUROPEAN PATENT APPLICATION

(11) **EP 4 701 320 A1**
(43) Date of publication of application: **25.02.2026**
(21) Application number: 24802844.1
(22) Date of filing: 29.04.2024
(51) Int. Cl.: H04W 74/0833

(54) **COMMUNICATION METHOD AND APPARATUS**

(30) Priority: 11.05.2023 CN 202310533950
(71) Applicant: Huawei Technologies Co., Ltd., Shenzhen, Guangdong 518129 (CN)
(72) Inventor: YOU, Chunhua, Shenzhen, Guangdong 518129 (CN); LOU, Chong, Shenzhen, Guangdong 518129 (CN)
(74) Representative: Isarpatent
(86) International application number: PCT/CN2024/090650
(87) International publication number: WO 2024/230561

(57) **Abstract**

This application relates to the field of communication technologies, and discloses a communication method and apparatus. The method includes: A terminal repeatedly sends a random access preamble to a network device, receives a response message for the preamble from the network device, and repeatedly sends a first uplink message to the network device based on the response message, where a first parameter for repeatedly sending the first uplink message corresponds to a first number of repetitions of the preamble. According to the foregoing method, the terminal may repeatedly send the random access preamble and repeatedly send the first uplink message in a random access procedure, that is, repeatedly sending the preamble and repeatedly sending the uplink message may coexist, so that a probability that the terminal successfully accesses the network device is increased in a weak coverage scenario.

## Description

### CROSS-REFERENCE TO RELATED APPLICATION

This application claims priority to Chinese Patent Application No. 202310533950.X, filed with the China National Intellectual Property Administration on May 11, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Random access is a procedure from sending random access signals by a terminal to start to attempt network access to establishing a basic signaling connection to a network device. The terminal may exchange information with the network device through random access, to implement uplink synchronization. Optionally, the terminal may further perform resource request or data transmission through random access.

However, related implementation of random access still needs to be further studied.

### SUMMARY

This application provides a communication method and apparatus, to repeatedly send a random access preamble, so as to increase a probability that a terminal successfully accesses a network device in a weak coverage scenario.

According to a first aspect, an embodiment of this application provides a communication method. The method may be applied to a terminal or a module (for example, a chip or a circuit) in the terminal. An example in which the method is applied to the terminal is used. In the method, the terminal repeatedly sends a random access preamble to a network device, where a number of repetitions of the preamble is a first number of repetitions; receives a response message for the preamble from the network device; and repeatedly sends a first uplink message to the network device based on the response message, where a first parameter for repeatedly sending the first uplink message corresponds to the first number of repetitions.

According to the foregoing method, the terminal may repeatedly send the random access preamble and repeatedly send the first uplink message, that is, repeatedly sending a preamble and repeatedly sending an uplink message may coexist, so that a probability that the terminal successfully accesses the network device is increased in a weak coverage scenario.

In a possible design, the method further includes: receiving first configuration information from the network device, where the first configuration information is used for configuring M candidate parameters that correspond to the first number of repetitions and that are for repeatedly sending the uplink message, and M is a positive integer; and receiving first information from the network device, where the first information is used for determining the first parameter from the M candidate parameters.

In this way, the network device configures, by using configuration information, the M candidate parameters corresponding to the first number of repetitions, and does not need to additionally indicate the M candidate parameters, thereby reducing a transmission resource.

In a possible design, the repeatedly sending the random access preamble to a network device includes: receiving a PDCCH command from the network device, where the PDCCH command indicates the first number of repetitions; and sending the preamble to the network device based on the first number of repetitions indicated by the PDCCH command; or receiving a downlink signal from the network device, and when signal quality of the downlink signal is within a threshold range corresponding to the first number of repetitions, repeatedly sending the preamble to the network device based on the first number of repetitions.

In a possible design, the first information is carried in the response message.

In a possible design, the first configuration information is further used for configuring N candidate parameters that correspond to a second number of repetitions of the preamble and that are for repeatedly sending the uplink message, the N candidate parameters are different from the M candidate parameters, and N is a positive integer.

In a possible design, the method further includes: receiving second configuration information from the network device, where the second configuration information is used for configuring W candidate parameters for repeatedly sending the uplink message; and receiving first information and second information from the network device, where the second information is used for determining M candidate parameters from the W candidate parameters, and the first information is used for determining the first parameter from the M candidate parameters, where W and M are both positive integers.

In this way, the network device may configure the W candidate parameters for the terminal, and cause the terminal to repeatedly send the uplink message based on the first parameter in the W candidate parameters by using the first indication information and the second indication information, so that the network device manages and controls the terminal. In addition, the network device indicates the M candidate parameters by using the second information, and indicates the first parameter in the M candidate parameters by using the first information, so as to reduce indication overheads.

In a possible design, the first information is carried in the response message, the second information is carried in the response message or a physical downlink control channel PDCCH command, and the PDCCH command is used for triggering repeated sending of the random access preamble to the network device.

In a possible design, the PDCCH command further indicates the first number of repetitions.

In a possible design, repeatedly sending the random access preamble to the network device includes: repeatedly sending the preamble to the network device on a same beam.

In a possible design, the first parameter includes a number of repetitions of the first uplink message and a modulation and coding scheme MCS.

According to a second aspect, an embodiment of this application provides a communication method. The method may be applied to a network device or a chip in the network device. An example in which the method is applied to the network device is used. In the method, the network device receives a random access preamble from a terminal, where a number of repetitions of the preamble is a first number of repetitions; sends first information to the terminal, where the first information indicates a first parameter for repeatedly sending a first uplink message; and receives the first uplink message based on the first parameter, where the first parameter corresponds to the first number of repetitions.

In a possible design, the method further includes: sending first configuration information to the terminal, where the first configuration information is used for configuring M candidate parameters that correspond to the first number of repetitions and that are for repeatedly sending the uplink message, and M is a positive integer. That the first information indicates the first parameter includes: The first information is used for determining the first parameter from the M candidate parameters.

**In** a possible design, the first information is carried in a response message.

**In** a possible design, the first configuration information is further used for configuring N candidate parameters that correspond to a second number of repetitions of the preamble and that are for repeatedly sending the uplink message, the N candidate parameters are different from the M candidate parameters, and N is a positive integer.

In a possible design, the method further includes: sending second configuration information to the terminal, where the second configuration information is used for configuring W candidate parameters for repeatedly sending the uplink message; and sending second information to the terminal, where the second information is used for determining M candidate parameters from the W candidate parameters. That the first information indicates the first parameter includes: The first information is used for determining the first parameter from the M candidate parameters. W and M are both positive integers.

In a possible design, the first information is carried in a response message, the second information is carried in the response message or a physical downlink control channel PDCCH command, and the PDCCH command is used for triggering repeated sending of the random access preamble to the network device.

In a possible design, the method further includes: sending the PDCCH command to the terminal, where the PDCCH command indicates the first number of repetitions.

In a possible design, the first parameter includes a number of repetitions of the first uplink message and a modulation and coding scheme MCS.

It may be understood that the method claimed in the second aspect corresponds to the first aspect. For beneficial effects of related technical features in the second aspect, refer to the descriptions of the first aspect. Details are not described again.

According to a third aspect, an embodiment of this application provides a communication method. The method may be applied to a terminal or a module (for example, a chip or a circuit) in the terminal. An example in which the method is applied to the terminal is used. In the method, the terminal repeatedly sends a random access preamble to a network device; receives indication information from the network device, where the indication information indicates that an uplink message corresponding to a number of repetitions of the preamble is sent once; and sends a first uplink message to the network device based on the indication information.

According to the foregoing method, the terminal may repeatedly send the random access preamble in a random access procedure, but does not repeatedly send an uplink message for random access, so that resource overheads can be reduced while a probability that the terminal successfully accesses the network device is increased.

In a possible design, the indication information is carried in any one of the following: a radio resource control RRC message; a response message for the preamble; and a PDCCH command. The PDCCH command is used for triggering repeated sending of the random access preamble to the network device.

In a possible design, the PDCCH command further indicates a number of repetitions of the preamble. Repeated sending the random access preamble to the network device includes: repeatedly sending the preamble to the network device based on the number of repetitions of the preamble indicated by the PDCCH command.

In a possible design, repeatedly sending the random access preamble to the network device includes: receiving a downlink signal from the network device; and when signal quality of the downlink signal is within a threshold range corresponding to the number of repetitions of the preamble, repeatedly sending the random access preamble to the network device based on the number of repetitions of the preamble.

In a possible design, repeatedly sending the random access preamble to the network device includes: repeatedly sending the preamble to the network device on different beams.

According to a fourth aspect, an embodiment of this application provides a communication method. The method may be applied to a terminal or a module (for example, a chip or a circuit) in the terminal. An example in which the method is applied to the terminal is used. In the method, indication information is sent to the terminal, where the indication information indicates that an uplink message corresponding to a number of repetitions of a preamble is not repeatedly sent; and the uplink message is received.

In a possible design, the indication information is carried in any one of the following: an RRC message; a response message for the preamble; and a PDCCH command. The PDCCH command is used for triggering repeated sending of the preamble to a network device.

In a possible design, the PDCCH command further indicates the number of repetitions of the preamble.

According to a fifth aspect, this application provides a communication apparatus. The communication apparatus has functions for implementing the first aspect to the fourth aspect. For example, the communication apparatus includes a corresponding module, unit, or means for performing an operation in the first aspect to the fourth aspect. The function, the unit, or the means may be implemented by using software, may be implemented by using hardware, or may be implemented by using hardware executing corresponding software.

In a possible design, the communication apparatus includes a processing unit and a communication unit. The communication unit may be configured to receive a signal and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect to the fourth aspect.

In a possible design, the communication apparatus includes a processor, and the processor may be configured to be coupled to a memory. The memory may store a necessary computer program or necessary instructions for implementing functions in the first aspect to the fourth aspect. The processor may execute the computer program or the instructions stored in the memory. When the computer program is executed or the instructions are executed, the communication apparatus is caused to implement the method in any possible design or implementation in the first aspect to the fourth aspect.

In a possible design, the communication apparatus includes a processor and a memory, and the memory may store a necessary computer program or necessary instructions for implementing functions in the first aspect to the fourth aspect. The processor may execute the computer program or the instructions stored in the memory. When the computer program is executed or the instructions are executed, the communication apparatus is caused to implement the method in any possible design or implementation in the first aspect to the fourth aspect.

In a possible design, the communication apparatus includes a processor and an interface circuit. The processor is configured to: communicate with another apparatus through the interface circuit, and perform the method in any possible design or implementation of the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and one or more memories. The memory may be integrated with the processor, or the memory and the processor are disposed separately. In a specific implementation procedure, the memory and the processor may be integrated into one chip, or may be disposed on different chips. A type of the memory and a manner in which the memory and the processor are disposed are not limited in embodiments of this application.

According to a sixth aspect, this application provides a communication system. The communication system may include a terminal and a network device. The terminal is configured to perform the method according to the first aspect, and the network device is configured to perform the method according to the second aspect. Alternatively, the terminal is configured to perform the method according to the third aspect, and the network device is configured to perform the method according to the fourth aspect.

According to a seventh aspect, this application provides a computer-readable storage medium. The computer storage medium stores computer-readable instructions. When a computer reads and executes the computer-readable instructions, the computer is caused to perform the method in any possible design of the first aspect to the fourth aspect.

According to an eighth aspect, this application provides a computer program product. When a computer reads and executes the computer program product, the computer is caused to perform the method in any possible design of the first aspect to the fourth aspect.

According to a ninth aspect, this application provides a chip. The chip includes a processor. The processor is coupled to a memory, and is configured to read and execute a software program stored in the memory, to implement the method in any possible design of the first aspect to the fourth aspect.

### BRIEF DESCRIPTION OF DRAWINGS

FIG. 1 is a diagram of an architecture of a communication system to which an embodiment of this application is applicable;
FIG. 2A is a diagram of random access procedure according to an embodiment of this application;
FIG. 2B is a diagram of another random access procedure according to an embodiment of this application;
FIG. 3 is a schematic flowchart corresponding to a communication method according to Embodiment 1 of this application;
FIG. 4 is a schematic flowchart corresponding to a communication method according to Embodiment 2 of this application;
FIG. 5 is a schematic flowchart corresponding to a communication method according to Embodiment 3 of this application;
FIG. 6 is a schematic flowchart corresponding to a communication method according to Embodiment 4 of this application;
FIG. 7 is a block diagram of a possible example of an apparatus according to an embodiment of this application;
FIG. 8 is a diagram of a structure of a network device according to an embodiment of this application; and
FIG. 9 is a diagram of a structure of a terminal according to an embodiment of this application.

### DESCRIPTION OF EMBODIMENTS

Technical solutions in embodiments of this application are described below with reference to the accompanying drawings in embodiments of this application.

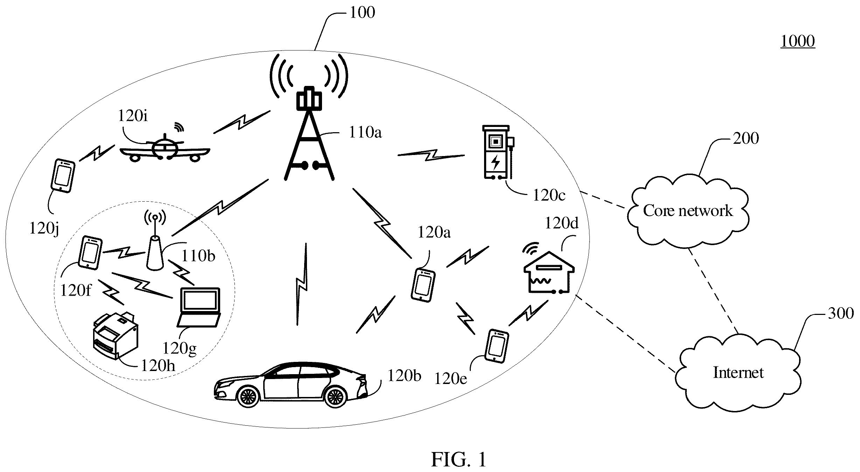

FIG. 1 is a diagram of an architecture of a communication system to which an embodiment of this application is applicable. As shown in FIG. 1, the communication system 1000 includes a radio access network 100, and optionally further includes a core network 200 and an internet 300. The radio access network 100 may include at least one network device (for example, a radio access network device or an access network device), for example, 110a and 110b in FIG. 1, and may further include at least one terminal, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle.

In FIG. 1, the terminal may be connected to the network device, and the network device may be connected to a core network device in the core network. The core network device and the network device may be different physical devices that are independent of each other; functions of the core network device and logical functions of the network device may be integrated into a same physical device; or some functions of the core network device and some functions of the network device may be integrated into one physical device. Terminals may be connected to each other in a wired or wireless manner, and network devices may be connected to each other in a wired or wireless manner. FIG. 1 is merely a diagram. The communication system may further include another device, for example, a wireless relay device and a wireless backhaul device, which are not drawn in FIG. 1.

The following describes the network device and the terminal.

### (1) Network device

The network device is a device that is located on a network side of the foregoing communication system and that has a wireless transceiver function, or a chip or a chip system that may be disposed in the device.

For example, the network device in this embodiment of this application may be an access point (access point, AP) in a Wi-Fi system, for example, a home gateway, a router, a server, a switch, or a bridge, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a radio relay node, a radio backhaul node, a transmission point (transmission and reception point, TRP, or transmission point, TP), or the like. Alternatively, the network device may be a next generation NodeB (next generation NodeB, gNB) in a 5G system, or a network node that forms a gNB, for example, a central unit (central unit, CU), a distributed unit (distributed unit, DU), or a roadside unit (road side unit, RSU) having a base station function, or may be a satellite or a base station in various forms in the future.

**In** embodiments of this application, an apparatus configured to implement a function of the network device may be a network device; or may be an apparatus, for example, a chip system, that can support the network device in implementing the function. The apparatus may be mounted in the network device. The chip system may include a chip, or may include a chip and another discrete device. In the technical solutions provided in embodiments of this application, an example in which the apparatus configured to implement the function of the network device is the network device is used to describe the technical solutions provided in embodiments of this application.

### (2) Terminal

The terminal may be a terminal that accesses the foregoing communication system and that has a wireless transceiver function, or may be a chip or a chip system that may be disposed in the terminal. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

**In** embodiments of this application, an apparatus configured to implement a function of the terminal may be a terminal; or may be an apparatus, for example, a chip system, that can support the terminal in implementing the function. The apparatus may be mounted in the terminal. In the technical solutions provided in embodiments of this application, an example in which the apparatus configured to implement the function of the terminal is the terminal is used to describe the technical solutions provided in embodiments of this application.

In addition, a same terminal or network device may provide different functions in different application scenarios. For example, the mobile phone in FIG. 1 includes 120a, 120e, 120f, and 120j. The mobile phone 120a may access the base station 110a, connect to a vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the network device and the terminal may be relative. A helicopter or the uncrewed aerial vehicle 120i in FIG. 1 may be configured as a mobile base station. For a terminal 120j that accesses the radio access network 100 through 120i, a terminal 120i is a base station; while for a base station 110a, 120i is a terminal, in other words, 110a and 120i communicate with each other based on a wireless air interface protocol. Certainly, communication between 110a and 120i may alternatively be performed based on an interface protocol between the base stations. In this case, for 110a, 120i is also a base station. Therefore, both the radio access network and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

The network device and the terminal may be at fixed locations, or may be movable. The network device and the terminal may be deployed on land, including indoor or outdoor and handheld or vehicle-mounted, may be deployed on water, or may be deployed on an airplane, a balloon, and a satellite in the air. Application scenarios of the network device and the terminal are not limited in embodiments of this application.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource used for wireless communication is not limited in embodiments of this application.

The communication system shown in FIG. 1 may support various radio access technologies (radio access technology, RAT). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), a 6G communication system, or a future-oriented evolved system. The communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as the communication system evolves and a new service scenario emerges.

In the communication system shown in FIG. 1, the terminal may establish uplink synchronization with the network device through random access, and obtain a unique terminal identifier, for example, a cell radio network temporary identifier (cell radio network temporary identifier, C-RNTI), so that the terminal may perform uplink transmission with the network device.

The following describes technical features related to random access in embodiments of this application.

### 1. Triggering of random access

Random access is a procedure from sending random access signals by a terminal to start to attempt network access to establishing a basic signaling connection to a network device. The random access signal may be used for initiating random access. For example, the random access signal may be a random access preamble (preamble). In embodiments of this application, random access may also be referred to as a random access procedure or a random access channel procedure.

For example, there may be a plurality of events (or scenarios) that trigger random access. The following describes some possible events (or scenarios):
(1) the terminal performing initial access, that is, switching from a radio resource control (radio resource control, RRC) idle (RRC_idle) state to an RRC connected (RRC_connected) state;
(2) an RRC connection re-establishment procedure (RRC connection re-establishment procedure);
(3) handover (handover), where the terminal is in the RRC connected state, and in this case, the terminal needs to establish uplink synchronization with a new cell;
(4) in the RRC connected state, an uplink synchronization status being "unsynchronized" when downlink data; or in the RRC connected state, an uplink synchronization status being "unsynchronized" when uplink data arrives;
(5) in the RRC connected state, no physical uplink control channel (physical uplink control channel, PUCCH) resource being available for transmission of scheduling requests (scheduling request, SR) when uplink data arrives;
(6) an SR failure, causing a need of random access for re-obtaining PUCCH resources;
(7) a request by RRC upon synchronization reconfiguration;
(8) access in an RRC inactive state: the terminal switching from the RRC inactive state to the RRC connected state;
(9) establishing time alignment when a secondary cell is added;
(10) requesting on-demand system information (system information, SI) (where the system information is classified into minimum SI and on-demand SI in a 5G communication system, the minimum SI needs to be received by all terminals, and the on-demand SI may be requested based on requirements of the terminal); and
(11) beam failure recovery (beam failure recovery, BFR)

### 2. Steps of random access

For example, depending on whether a preamble sent by a terminal is selected by the terminal, random access may be classified into contention-based random access (contention-based random access, CBRA) and contention-free random access (contention-free random access, CFRA). For the contention-based random access, the terminal may select a preamble. When an event that triggers random access is (2)/(3)/(4)/(5)/(6)/(8)/(10)/(11) described above, the contention-based random access may be used. For the contention-free random access, a network device may allocate a preamble to the terminal. When an event that triggers random access is (3)/(4)/(7)/(9)/(10)/(11) described above, the contention-free random access may be used.

In addition, it may be understood that, for the contention-based random access, the terminal usually initiates random access in a primary cell, and for the contention-free random access, the terminal may initiate random access in the primary cell or may initiate random access in a secondary cell.

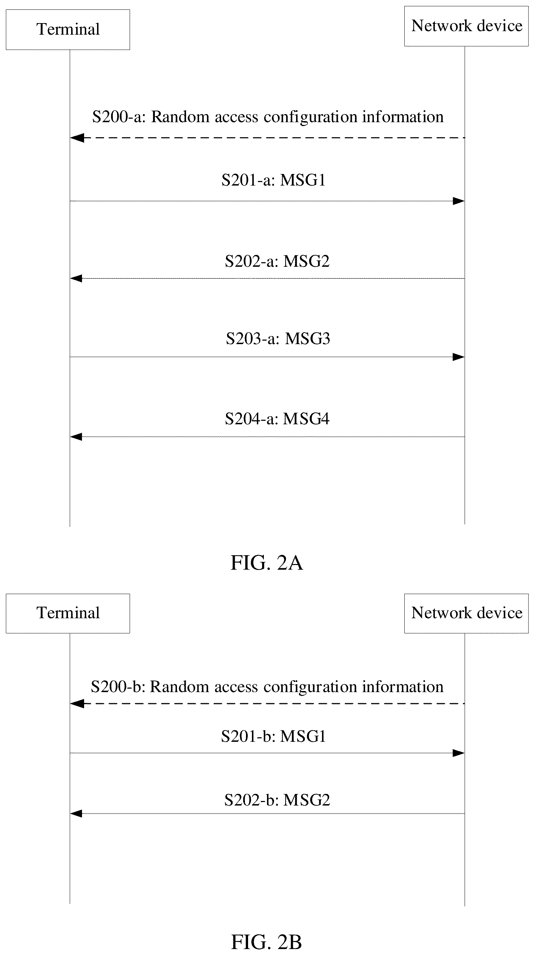

Some steps included in random access are described with reference to FIG. 2A and FIG. 2B. FIG. 2A is a diagram of a contention-based random access procedure according to an embodiment of this application. As shown in FIG. 2A, random access may include the following steps.

S200-a: A network device sends random access configuration information to a terminal, and the terminal may receive the random access configuration information from the network device. This step may be preparations before the random access, and may not be a step included in the random access.

For example, the random access configuration information may be used for configuring a random access resource, and the random access resource may include a random access resource corresponding to the CBRA (that is, a CBRA resource) and a random access resource corresponding to the CFRA (that is, a CFRA resource). The CBRA resource may correspond to all synchronization signal and physical broadcast channel (physical broadcast channel, PBCH) blocks (synchronization signal and PBCH block, SSB) that are actually transmitted in a cell. The CFRA resource may correspond to some SSBs or channel state information reference signals (channel state information reference signal, CSI-RS).

S201-a: The terminal sends a random access request to the network device, where the random access request may include a random access preamble, and the network device receives the random access preamble from the terminal. The random access request is also referred to as a first message or a message 1 (MSG1) in random access.

For example, the terminal may select an SSB with relatively good signal quality based on signal quality of a plurality of SSBs of a to-be-accessed cell, and send the preamble to the network device on a CBRA resource corresponding to the SSB. The preamble may be selected by the terminal. The signal quality may include received power, and the received power may be reference signal received power (reference signal received power, RSRP).

S202-a: After detecting the preamble sent by the terminal, the network device sends a response message for the preamble, namely, a random access response (random access response, RAR), to the terminal. The terminal receives the random access response from the network device. The random access response is also referred to as a second message or a message 2 (MSG2) in the random access procedure.

For example, the message 2 may include an uplink grant, a timing advance command, and a temporary C-RNTI.

S203-a: The terminal sends a random access uplink message to the network device, and the network device receives the uplink message from the terminal. The uplink message is also referred to as a third message or a message 3 (MSG3) in random access.

S204-a: The network device sends a contention resolution message to the terminal when detecting the message 3, and the terminal receives the contention resolution message from the network device, where the contention resolution message is also referred to as a fourth message or a message 4 (MSG4).

For example, the message 4 may include a part of content of the message 3, or the message 4 may include a physical downlink control channel (physical downlink control channel, PDCCH) of a C-RNTI, that is, the message 4 may be scheduled by using the C-RNTI.

FIG. 2B is a diagram of a contention-free random access procedure according to an embodiment of this application. As shown in FIG. 2B, random access may include the following steps.

S200-b: A network device sends random access configuration information to a terminal, and the terminal may receive the random access configuration information from the network device. This step may be preparations before the random access, and may not be a step included in the random access.

S201-b: The terminal sends a random access request to the network device, where the random access request may include a random access preamble, and the network device receives the random access preamble from the terminal. The random access request is also referred to as a first message or a message 1 (MSG1) in the random access.

For example, the terminal may select an SSB or a CSI-RS with relatively good quality, and send the preamble to the network device on a CFRA resource corresponding to the SSB or the CSI-RS. The preamble may be allocated by the network device to the terminal.

S202-b: After detecting the preamble sent by the terminal, the network device sends a response message for the preamble, namely, a random access response (random access response, RAR), to the terminal. The terminal receives the random access response from the network device. The random access response is also referred to as a second message or a message 2 (MSG2) in the random access procedure.

For example, the message 2 may include an uplink grant, a timing advance command, and a temporary C-RNTI.

It may be understood that, for the contention-free random access, it may be considered that random access succeeds provided that the terminal receives the message 2. Further, after the message 2, the terminal may also send an uplink message to the network device based on the uplink grant in the message 2. The uplink message does not belong to a step included in the random access.

According to the descriptions of the foregoing related technical features, the contention-based random access is used as an example. Because information carried in the random access preamble (that is, the message 1) is apparently less than information carried in the uplink message (that is, the message 3), coverage of the preamble is better than coverage of the uplink message. To align the coverage of the uplink message with the coverage of the preamble, a coverage improvement technology of repeatedly sending the uplink message is currently introduced, that is, the coverage of the uplink message can be aligned with the coverage of the preamble by sending the uplink message for a plurality of times.

However, in the foregoing method, only repeated sending of the uplink message is supported, and repeated sending of the preamble is not supported. Therefore, embodiments of this application provide some communication methods, to implement repeated sending of a preamble. For example, embodiments of this application provide two possible solutions: Solution 1 and Solution 2.

For Solution 1, because only repeated sending of an uplink message is supported, and repeated sending of a preamble is not supported, a probability of successfully accessing a network device may not be effectively increased. For example, in some scenarios (for example, a scenario in which a terminal is far away from the network device, that is, a weak coverage scenario), coverage of a preamble is also limited, and the preamble sent by the terminal to the network device may fail to be received. Consequently, the terminal fails to access the network device. Alternatively, even if the preamble sent by the terminal to the network device can be successfully received, an uplink message repeatedly sent by the terminal may also fail to be received (where coverage of the repeatedly sent uplink message is usually only aligned with the coverage of the preamble, or may be slightly weaker than the coverage of the preamble). Consequently, the terminal fails to access the network device. Therefore, in Solution 1, the terminal may repeatedly send the preamble and repeatedly send the uplink message, that is, repeatedly sending the preamble and repeatedly sending the uplink message may coexist, so that the probability that the terminal successfully accesses the network device is increased in the weak coverage scenario.

For Solution 2, a terminal may repeatedly send a preamble but does not repeatedly send an uplink message, so that resource overheads are reduced while a probability of successfully accessing a network device is increased. For example, in some scenarios (for example, the terminal is close to the network device, that is, in a strong coverage scenario), the terminal may repeatedly send a preamble on different beams (for example, a number of repetitions is 3, and the terminal may send the preamble once on a beam 1, send the preamble once on a beam 2, and send the preamble once on a beam 3), and then the network device may select a relatively good beam to send a response message for the preamble to the terminal. Correspondingly, after receiving the response message on the beam, the terminal may send an uplink message to the network device on the beam. Because the beam is a relatively good beam, the terminal needs to send the uplink message only once, without repeatedly sending the uplink message. This helps reduce resource overheads.

The following describes, with reference to Embodiment 1 to Embodiment 4, in detail the communication method provided in embodiments of this application.

### Embodiment 1

In Embodiment 1, a possible implementation process is described for Solution 1.

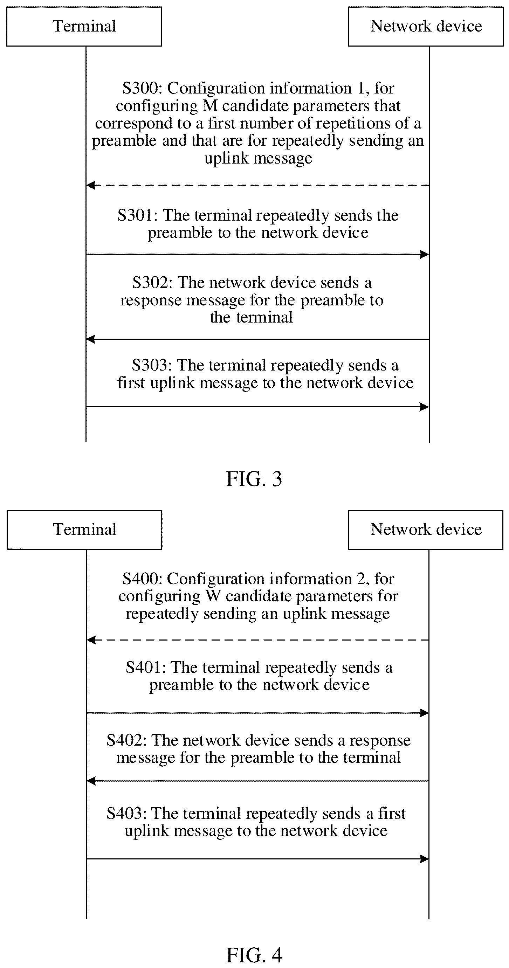

**FIG. 3** is a schematic flowchart corresponding to a communication method according to Embodiment 1 of this application. As shown in FIG. 3, the method includes the following steps.

**S300:** A network device sends configuration information 1 to a terminal, where the configuration information 1 is used for configuring M candidate parameters that correspond to a first number of repetitions of a preamble and that are for repeatedly sending an uplink message. Correspondingly, the terminal receives the configuration information 1.

For example, the configuration information 1 may be for configuring W candidate parameters for repeatedly sending the uplink message, and W and M are both positive integers. The uplink message herein is a message corresponding to an uplink grant in a random access response, in other words, the uplink message is carried on a resource indicated by the uplink grant. For example, the uplink message may be a message 3 in contention-based random access, or may be a message sent by the terminal based on an uplink grant in a response message for the preamble (that is, a response message in contention-free random access).

Each of the W candidate parameters may include a number of repetitions of the uplink message, and may further include other possible information, for example, a modulation and coding scheme (modulation and coding scheme, MCS) of the uplink message. Different candidate parameters include different numbers of repetitions of the uplink message, and information other than the numbers of repetitions included in different candidate parameters may be the same or may be different. The following uses an example in which the candidate parameter includes the number of repetitions of the uplink message for description.

For example, the W candidate parameters may be divided into a plurality of lists (where the "list" may also be replaced with a "set" or a "group"). For example, the W candidate parameters may be divided into three lists: a list 1, a list 2, and a list 3. Different lists include different candidate parameters. The list 1 includes M candidate parameters. For example, the M candidate parameters include numbers 8 and 16 of repetitions of the uplink message (that is, M=2). The list 2 includes N candidate parameters. For example, the N candidate parameters include numbers 32 and 64 of repetitions of the uplink message (that is, N=2). The list 3 includes P candidate parameters. For example, the P candidate parameters include numbers 2 and 4 of repetitions of the uplink message (that is, P=2). Further, the configuration information 1 is further used for configuring correspondences between the different lists and a number of repetitions of the preamble. For example, the configuration information 1 is further used for configuring that the list 1 (that is, the M candidate parameters) corresponds to the first number of repetitions of the random access preamble, the list 2 (that is, the N candidate parameters) corresponds to a second number of repetitions of the random access preamble, and the list 3 (that is, the P candidate parameters) corresponds to no repeated sending of the random access preamble (that is, a number of sending times is 1), as shown in Table 1.

**Table 1: Correspondence between a number of repetitions of an uplink message and a number of repetitions of a preamble**

| Number of repetitions of the uplink message | Number of repetitions of the preamble | Threshold range |
|---|---|---|
| P candidate parameters (for example, numbers 2 and 4 of repetitions) | No repeated sending | Threshold range 0 |
| M candidate parameters (for example, numbers 8 and 16 of repetitions) | First number of repetitions (for example, a number 4 of repetitions) | Threshold range 1 |
| N candidate parameters (for example, numbers 32 and 64 of repetitions) | Second number of repetitions (for example, a number 8 of repetitions) | Threshold range 2 |

The foregoing uses an example in which one number of repetitions of the preamble corresponds to one list. In another possible example, one list may alternatively correspond to a plurality of numbers of repetitions of the preamble. For example, both the first number of repetitions and the second number of repetitions of the preamble correspond to the list 1 (that is, the M candidate parameters).

In addition, optionally, the configuration information 1 is further used for configuring other possible information. For example, the configuration information 1 is further used for configuring threshold ranges corresponding to different numbers of repetitions of the preamble (refer to the following descriptions), as shown in Table 1. For example, the threshold range 2 is (a, b], the threshold range 1 is (b, c], the threshold range 0 is (c, d], a is less than b, b is less than c, and c is less than d. In other words, the threshold range 0 may be greater than the threshold range 1, and the threshold range 1 may be greater than the threshold range 2. That is, a larger number of repetitions of the preamble may indicate a smaller value of a corresponding threshold range (that is, weaker coverage).

For another example, the configuration information 1 is further used for configuring random access resources corresponding to different numbers of repetitions of the preamble, where the random access resources may specifically include a first random access resource corresponding to the first number of repetitions of the preamble, a second random access resource corresponding to the second number of repetitions of the preamble, and a third random access resource corresponding to no repeated sending of the preamble. There are a plurality of manners for configuring correspondences between the random access resources and the different numbers of repetitions of the preamble. For example, a number of repetitions of the preamble and corresponding to a random access resource (for example, the first random access resource) is indicated in a configuration of the random access resource. In this way, the network device may learn of the number of repetitions of the preamble based on the random access resource on which the preamble is received. For example, if the network device receives the preamble on the first random access resource, the network device may learn that the number of repetitions of the preamble is the first number of repetitions.

It should be noted that S300 is an optional step, in other words, S300 may not be performed. When S300 is not performed, content configured by using the configuration information 1 may be predefined in a protocol.

S301: The terminal repeatedly sends the random access preamble to the network device. For example, the number of repetitions of the preamble is the first number of repetitions.

The terminal herein may determine the number of repetitions of the preamble, and repeatedly send the preamble to the network device based on the number of repetitions of the preamble. For example, if the number of repetitions of the preamble and determined by the terminal is the first number of repetitions (for example, 4), the terminal may repeatedly send the preamble to the network device for four times. For example, the terminal may repeatedly send the preamble to the network device on a same beam, to improve uplink coverage.

There may be a plurality of implementations in which the terminal determines the number of repetitions of the preamble. For example, the terminal may determine the number of repetitions of the preamble based on signal quality (for example, RSRP) of a downlink signal. The downlink signal may be an SSB or another possible signal. RSRP of a downlink reference signal may be cell-level RSRP, for example, an average value of RSRP of a plurality of downlink reference signals of a cell. This manner is applicable to CBRA or CFRA. Specifically, different numbers of repetitions of the preamble may correspond to different threshold ranges. If determining that the RSRP is in a threshold range corresponding to a specific number of repetitions of the preamble, the terminal may determine that the number of repetitions of the preamble is the specific number of repetitions. For example, the first number of repetitions of the preamble corresponds to the threshold range 1, and the second number of repetitions of the preamble corresponds to the threshold range 2. If the RSRP is in the threshold range 1, the terminal may determine that the number of repetitions of the preamble is the first number of repetitions, and send the preamble based on the first number of repetitions.

For another example, the terminal may determine the number of repetitions of the preamble based on an indication of the network device. This manner is applicable to CFRA. For example, the network device may send a PDCCH command to the terminal, where the PDCCH command indicates the first number of repetitions. In this case, the terminal may determine, based on the PDCCH command, that a number of repetitions of a preamble is the first number of repetitions, and send the CFRA preamble based on the first number of repetitions.

Optionally, the PDCCH command may further include resource indication information, and the resource indication information indicates a random access resource carrying the preamble. As described above, the first number of repetitions corresponds to the first random access resource. The first random access resource may include a plurality of resources, each resource is used to send the preamble once, and the resource indication information may indicate some of the plurality of resources. Further, the terminal may repeatedly send the preamble based on the resource indicated by the resource indication information.

S302: After receiving the preamble, the network device sends the response message for the preamble to the terminal. Correspondingly, the terminal receives the response message for the preamble.

S303: The terminal repeatedly sends a first uplink message to the network device based on the response message, where a first parameter for repeatedly sending the first uplink message corresponds to the first number of repetitions of the preamble.

If random access initiated by the terminal herein is contention-based random access, the first uplink message may be a message 3. If random access initiated by the terminal is contention-free random access, the first uplink message may be a message sent by the terminal based on the uplink grant in the response message.

For example, the terminal may determine the first parameter from the M candidate parameters corresponding to the first number of repetitions, and repeatedly send the first uplink message to the network device based on the first parameter. For example, if the first parameter includes a number (for example, 8) of repetitions of the uplink message, the terminal may repeatedly send the first uplink message for eight times based on the number of repetitions. For another example, if the first parameter includes an MCS of the uplink message, the terminal may repeatedly send the first uplink message based on the MCS (that is, an MCS used for each time of sending of the first uplink message is the MCS). Correspondingly, the network device may repeatedly receive the first uplink message based on the first parameter.

There are a plurality of implementations in which the terminal determines the first parameter from the M candidate parameters. For example, the terminal may receive first information from the network device, and determine the first parameter from the M candidate parameters based on the first information. In other words, the first information is used for determining the first parameter from the M candidate parameters. For example, the M candidate parameters include numbers 8 and 16 of repetitions, and the first information may include one bit. When a value of the bit is 0, the terminal may determine that the first parameter is 8. When a value of the bit is 1, the terminal may determine that the first parameter is 16. The first information may be carried in the response message or another possible message. This is not specifically limited.

In this case, the first parameter may be determined by the network device from the M candidate parameters based on a received status of the preamble, and is indicated to the terminal by using the first information. For example, if receive quality of the preamble is relatively good, the network device may select a relatively small number of repetitions from the M candidate parameters as the first parameter. If receive quality of the preamble is relatively poor, the network device may select a relatively large number of repetitions from the M candidate parameters as the first parameter. In this manner, the determined first parameter is proper, and transmission resource overheads can be reduced while successful transmission is ensured.

Optionally, for CBRA, the method further includes: The network device sends a contention resolution message to the terminal. For details, refer to the foregoing descriptions.

According to the foregoing method, the network device configures, for the terminal by using the configuration information, a correspondence between the number of repetitions of the preamble and the candidate parameter for repeatedly sending the uplink message, and further, the terminal may send the uplink message by using a corresponding parameter based on the number of repetitions of the preamble. In this way, the terminal may repeatedly send the random access preamble and repeatedly send the uplink message, that is, repeatedly sending the preamble and repeatedly sending the uplink message may coexist, so that a probability that the terminal successfully accesses the network device is effectively increased in a weak coverage scenario.

### Embodiment 2

**In** Embodiment 2, another possible implementation process is described for Solution 1.

FIG. 4 is a schematic flowchart corresponding to a communication method according to Embodiment 2 of this application. As shown in FIG. 4, the method includes the following steps.

S400: A network device sends configuration information 2 to a terminal, where the configuration information 2 is used for configuring W candidate parameters for repeatedly sending an uplink message. Correspondingly, the terminal receives the configuration information 2.

For example, a difference between the configuration information 2 and the foregoing configuration information 1 lies in that the configuration information 2 may not be for configuring a correspondence between a candidate parameter for repeatedly sending the uplink message and a number of repetitions of a preamble. For content other than the difference, for the configuration information 2, refer to the descriptions of the configuration information 1.

S401: The terminal repeatedly sends a random access preamble to the network device. For example, a number of repetitions of the preamble is a first number of repetitions.

For example, for a specific implementation of S401, refer to the descriptions of S301.

S402: After receiving the preamble, the network device sends a response message for the preamble to the terminal. Correspondingly, the terminal receives the response message for the preamble.

S403: The terminal repeatedly sends a first uplink message to the network device based on the response message, where a first parameter for repeatedly sending the first uplink message corresponds to the first number of repetitions of the preamble.

The terminal herein may determine the first parameter from the W candidate parameters, and repeatedly send the uplink message to the network device based on the first parameter. There are a plurality of implementations in which the terminal determines the first parameter from the W candidate parameters. The following describes two possible implementations, that is, Implementation 1 and Implementation 2.

### (1) Implementation 1

The terminal may receive second information from the network device, where the second information is used for determining M candidate parameters from the W candidate parameters, or in other words, the second information is used for determining one target list from a plurality of lists configured in the configuration information 2; and the terminal may receive first information from the network device, where the first information is used for determining the first parameter from the M candidate parameters (that is, the target list). Further, the terminal may determine the first parameter from the W candidate parameters based on the second information and the first information.

For example, the W candidate parameters are divided into three lists: a list 1 (M candidate parameters), a list 2 (N candidate parameters), and a list 3 (P candidate parameters). The second information may include two bits. If values of the two bits are 00, the terminal may determine that the target list is the list 1. If values of the two bits are 01, the terminal may determine that the target list is the list 2. If values of the two bits are 10, the terminal may determine that the target list is the list 3.

If the second information indicates that the target list is the list 1, and the list 1 includes two candidate parameters (numbers 8 and 16 of repetitions), the first information may include one bit. When a value of the bit is 0, the terminal may determine that the first parameter is 8. When a value of the bit is 1, the terminal may determine that the first parameter is 16.

For example, the first information and the second information may be carried in a same message, or may be carried in different messages. For example, both the first information and the second information may be carried in the response message, or the first information is carried in the response message, and the second information is carried in a PDCCH command.

### (2) Implementation 2

The terminal may receive third information from the network device, where the third information is used for determining the first parameter from the W candidate parameters. For example, the third information may be carried in the response message.

For example, if the W candidate parameters include the six candidate parameters shown in Table 1, the third information may include three bits. If values of the three bits are 000, the terminal may determine that the first parameter is 2. If values of the three bits are 001, the terminal may determine that the first parameter is 4. If values of the three bits are 010, the terminal may determine that the first parameter is 8, and so on.

According to the foregoing method, the network device may not need to configure, in the configuration information, a correspondence between a candidate parameter for repeatedly sending the uplink message and a number of repetitions of the preamble. Instead, when the terminal initiates random access or is about to initiate random access, the network device may indicate a selection range (that is, the M candidate parameters) of the first parameter to the terminal, so that the first parameter for repeatedly sending the first uplink message can be more flexibly indicated.

### Embodiment 3

In Embodiment 3, a possible implementation process is described for Solution 2.

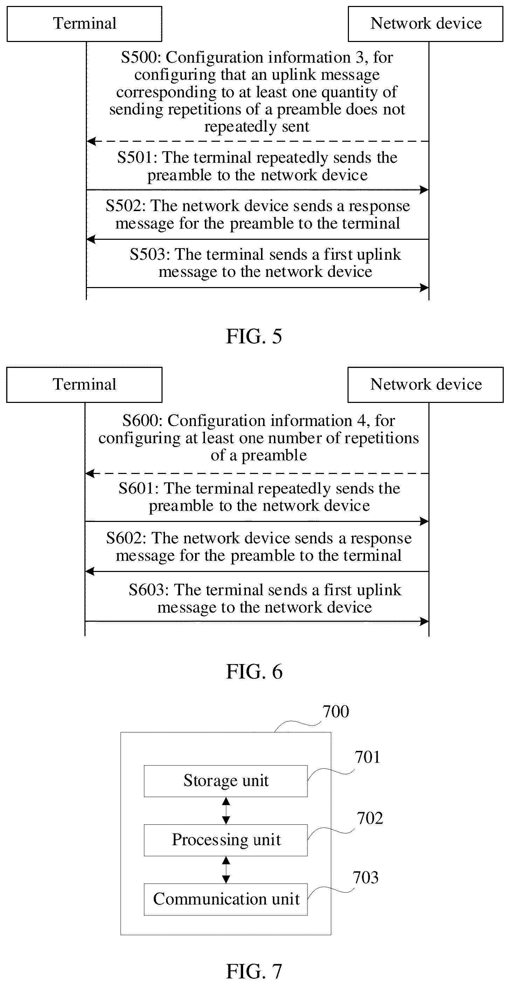

FIG. 5 is a schematic flowchart corresponding to a communication method according to Embodiment 3 of this application. As shown in FIG. 5, the method includes the following steps.

S500: A network device sends configuration information 3 to a terminal, where the configuration information 3 is used for configuring that an uplink message corresponding to at least one number of repetitions of a preamble is sent once (that is, no repeated sending). Correspondingly, the terminal receives the configuration information 3.

For example, the configuration information 3 is used for configuring a third number of repetitions and a fourth number of repetitions of the preamble, indication information 1 corresponding to the third number of repetitions, and indication information 2 corresponding to the fourth number of repetitions. The indication information 1 indicates that an uplink message corresponding to the third number of repetitions is not repeatedly sent, and the indication information 2 indicates that an uplink message corresponding to the fourth number of repetitions is not repeatedly sent. Table 2 shows an example of content configured in the configuration information 3.

**Table 2: An uplink message corresponding to a number of repetitions of a preamble is not repeatedly sent**

| Number of repetitions of the uplink message | Number of repetitions of the preamble | Threshold range |
|---|---|---|
| No repeated sending | Third number of repetitions (for example, a number 4 of repetitions) | Threshold range 3 |
| No repeated sending | Fourth number of repetitions (for example, a number 2 of repetitions) | Threshold range 4 |

It may be understood that the configuration information 3 may further be configured with other possible information. For example, the configuration information 3 is further used for configuring threshold ranges corresponding to different numbers of repetitions of the preamble, as shown in Table 2. For another example, the configuration information 3 is further used for configuring random access resources corresponding to different numbers of repetitions of the preamble. For details, refer to the descriptions in Embodiment 1.

S501: The terminal repeatedly sends a random access preamble to the network device, where a number of repetitions of the preamble is the third number of repetitions.

The terminal herein may determine the number of repetitions of the preamble, and repeatedly send the preamble to the network device based on the number of repetitions of the preamble on different beams. For example, if the number of repetitions of the preamble that is determined by the terminal is the third number of repetitions, the terminal may repeatedly send the preamble to the network device on different beams.

There may be a plurality of implementations in which the terminal determines the number of repetitions of the preamble. For example, the terminal may determine the number of repetitions of the preamble based on RSRP of a downlink signal, and the RSRP of the downlink signal may be cell-level RSRP. For example, the third number of repetitions of the preamble corresponds to the threshold range 3, and the fourth number of repetitions of the preamble corresponds to the threshold range 4. If the RSRP of the downlink signal is within the threshold range 3, the terminal may determine that the number of repetitions of the preamble is the third number of repetitions, and send the preamble based on the third number of repetitions. For another example, the terminal may determine the number of repetitions of the preamble based on an indication of the network device. For details, refer to the descriptions in Embodiment 1.

S502: After receiving the preamble, the network device sends a response message for the preamble to the terminal. Correspondingly, the terminal receives the response message for the preamble.

S503: The terminal determines, based on the configuration information 3, that the uplink message corresponding to the third number of repetitions is not repeatedly sent, and may send a first uplink message to the network device.

According to the foregoing method, the terminal may repeatedly send the random access preamble in a random access procedure, but does not repeatedly send the uplink message, so that resource overheads can be reduced while a probability that the terminal successfully accesses the network device is increased.

### Embodiment 4

In Embodiment 4, another possible implementation process is described for Solution 2.

FIG. 6 is a schematic flowchart corresponding to a communication method according to Embodiment 4 of this application. As shown in FIG. 6, the method includes the following steps.

S600: A network device sends configuration information 4 to a terminal, where the configuration information 4 is used for configuring at least one number of repetitions of a preamble. Correspondingly, the terminal receives the configuration information 4.

For example, the at least one number of repetitions of the preamble may include a third number of repetitions and a fourth number of repetitions. A difference between the configuration information 4 and the foregoing configuration information 3 lies in that: in the configuration information 4, uplink messages corresponding to the third number of repetitions and the fourth number of repetitions are not configured to be repeatedly sent.

S601: The terminal repeatedly sends a random access preamble to the network device, where a number of repetitions of the preamble is the third number of repetitions.

For example, for a specific implementation of S601, refer to the descriptions of S501.

S602: After receiving the preamble, the network device sends a response message for the preamble to the terminal, where the response message includes indication information, and the indication information indicates that an uplink message corresponding to the third number of repetitions of the preamble is not repeatedly sent. Correspondingly, the terminal receives the response message for the preamble.

For example, if the network device receives, on a plurality of beams, the preamble sent by the terminal, the network device may select a relatively good beam (for example, a beam with relatively good receiving quality, or a beam whose receiving quality is greater than a specified threshold), and send the response message for the terminal on the beam. Because the beam selected by the network device is a relatively good beam, the network device may indicate, by using the indication information, not to repeatedly send the uplink message, to reduce transmission resources.

S603: The terminal sends a first uplink message to the network device based on the indication information.

If the terminal herein receives the response message on a beam 1, the terminal may send the first uplink message to the network device once on the beam 1, without repeated sending.

It may be understood that, the foregoing descriptions are provided by using an example in which the indication information is carried in the response message. In another embodiment, the indication information may alternatively be carried in another possible message, for example, a PDCCH command.

According to the foregoing method, that the uplink message corresponding to the number of repetitions of the preamble does not repeatedly send does not need to be configured in the configuration information, but is additionally indicated by the network device, so that implementation is more flexible.

For Embodiment 1 to Embodiment 4, it should be noted:
(1) The foregoing Embodiment 1 to Embodiment 4 may be separately implemented, or may be implemented in combination. For example, Embodiment 1 may be combined with Embodiment 3. In this case, content configured by the configuration information may be shown in Table 3, that is, Table 1 in Embodiment 1 may be replaced with Table 3, or Table 2 in Embodiment 2 may be replaced with Table 3.

**Table 3: Correspondence between a number of repetitions of a preamble and a number of repetitions of an uplink message**

| Number of repetitions of the uplink message | Number of repetitions of the preamble | Beam used for repeatedly sending the preamble | Threshold range |
|---|---|---|---|
| P candidate parameters (for example, numbers 2 and 4 of repetitions) | No repeated sending | * | Threshold range 0 |
| M candidate parameters (for example, numbers 8 and 16 of repetitions) | First number of repetitions (for example, a number 4 of repetitions) | Same beam | Threshold range 1 |
| N candidate parameters (for example, numbers 32 and 64 of repetitions) | Second number of repetitions (for example, a number 8 of repetitions) | Same beam | Threshold range 2 |
| No repeated sending | Third number of repetitions (for example, a number 4 of repetitions) | Different beams | Threshold range 3 |
| No repeated sending | Fourth number of repetitions (for example, a number 2 of repetitions) | Different beams | Threshold range 4 |

Optionally, the configuration information may further configure whether the number of repetitions of the preamble corresponds to a same beam or different beams, as shown in Table 3. For example, the first number of repetitions and the second number of repetitions of the preamble correspond to a same beam, and the third number of repetitions and the fourth number of repetitions of the preamble correspond to different beams. To be specific, the terminal may repeatedly send the preamble on a same beam based on the first number of repetitions or the second number of repetitions; or the terminal may repeatedly send the preamble on different beams based on the third number of repetitions or the fourth number of repetitions.

For example, a value of a threshold range corresponding to a same beam may be less than a value of a threshold range corresponding to different beams. For example, repeatedly sending the preamble on a same beam is applicable to a weak coverage scenario, and repeatedly sending the preamble on different beams is applicable to a strong coverage scenario.

In addition, the third number of repetitions and the fourth number of repetitions corresponding to different beams may be the same as or different from the first number of repetitions and the second number of repetitions corresponding to a same beam.

(2) In Embodiment 1 and Embodiment 2, the terminal may repeatedly send the preamble on a same beam, for example, repeatedly send the preamble for K1 times. In this case, the preamble sent for K1 times may be a same preamble. In Embodiment 3 and Embodiment 4, the terminal may repeatedly send preambles on different beams, for example, repeatedly send preambles for K2 times. In this case, the preambles sent for K2 times may be same preambles, or may be different preambles.

(3) The foregoing Embodiment 1 to Embodiment 4 describe some possible implementation processes in which the terminal repeatedly sends a random access preamble. The foregoing focuses on differences in Embodiment 1 to Embodiment 4. For content other than the differences, Embodiment 1 to Embodiment 4 may be cross-referenced. In addition, in a same embodiment, cross-reference may also be made between different implementations or different examples.

(4) Step numbers in the flowcharts described in Embodiment 1 to Embodiment 4 are merely an example of an execution process, and do not constitute a limitation on an execution sequence of the steps. In embodiments of this application, there is no strict execution sequence between steps that do not have a time sequence dependency relationship with each other. In addition, not all steps shown in each flowchart are necessarily performed steps, and some steps may be added or deleted for each flowchart based on an actual requirement.

The foregoing mainly describes the solutions provided in embodiments of this application from a perspective of interaction between the terminal and the network device. It may be understood that, to implement the foregoing functions, the terminal or the network device may include corresponding hardware structures and/or software modules for performing the functions. A person skilled in the art should be easily aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes outside the scope of this application.

In embodiments of this application, division into functional units may be performed on the terminal and the network device based on the foregoing method examples. For example, division into each functional unit may be based on each corresponding function, or two or more functions may be integrated into one unit. The foregoing integrated unit may be implemented in the form of hardware, or may be implemented in a form of a software functional unit.

When an integrated unit is used, FIG. 7 is a block diagram of a possible example of an apparatus according to an embodiment of this application. As shown in FIG. 7, the apparatus 700 may include a processing unit 702 and a communication unit 703. The processing unit 702 is configured to control and manage actions of the apparatus 700. The communication unit 703 is configured to support communication between the apparatus 700 and another device. Optionally, the communication unit 703 is also referred to as a transceiver unit, and may include a receiving unit and/or a sending unit, which are respectively configured to perform a receiving operation and a sending operation. The apparatus 700 may further include a storage unit 701, configured to store program code and/or data of the apparatus 700.
(1) The apparatus 700 may be the terminal in the foregoing embodiments. The processing unit 702 may support the apparatus 700 in performing actions of the terminal in the foregoing method examples. Alternatively, the processing unit 702 mainly performs an internal action of the terminal in the method examples, and the communication unit 703 may support communication between the apparatus 700 and another device.

For example, in an embodiment, the communication unit 703 is configured to: repeatedly send a random access preamble to a network device; receive a response message for the preamble from the network device; and repeatedly send a first uplink message to the network device based on the response message, where a first parameter used for repeatedly sending the first uplink message corresponds to the first number of repetitions of the preamble.

In a possible design, the communication unit 703 is further configured to: receive first configuration information from the network device, where the first configuration information is used for configuring M candidate parameters that correspond to the first number of repetitions and that are for repeatedly sending the uplink message, and M is a positive integer; and receive first information from the network device, where the first information is used for determining the first parameter from the M candidate parameters.

In a possible design, the communication unit 703 is further configured to: receive a PDCCH command from the network device, where the PDCCH command indicates the first number of repetitions; and send the preamble to the network device based on the first number of repetitions indicated by the PDCCH command; or receive a downlink signal from the network device, and when signal quality of the downlink signal is within a threshold range corresponding to the first number of repetitions, repeatedly send the preamble to the network device based on the first number of repetitions.

In a possible design, the first information is carried in the response message.

In a possible design, the first configuration information is further used for configuring N candidate parameters that correspond to a second number of repetitions of the preamble and that are for repeatedly sending the uplink message, the N candidate parameters are different from the M candidate parameters, and N is a positive integer.

In a possible design, the communication unit 703 is further configured to: receive second configuration information from the network device, where the second configuration information is used for configuring W candidate parameters for repeatedly sending the uplink message; and receive first information and second information from the network device, where the second information is used for determining M candidate parameters from the W candidate parameters, and the first information is used for determining the first parameter from the M candidate parameters, where W and M are both positive integers.

In a possible design, the first information is carried in the response message, the second information is carried in the response message or a physical downlink control channel PDCCH command, and the PDCCH command is used for triggering repeated sending of the random access preamble to the network device.

In a possible design, the PDCCH command further indicates the first number of repetitions.

In a possible design, the communication unit 703 is further configured to repeatedly send the preamble to the network device on a same beam.

In a possible design, the first parameter includes a number of repetitions of the first uplink message and a modulation and coding scheme MCS.

(2) The apparatus 700 may be the network device in the foregoing embodiments. The processing unit 702 may support the apparatus 700 in performing actions of the network device in the foregoing method examples. Alternatively, the processing unit 702 mainly performs an internal action of the network device in the method examples, and the communication unit 703 may support communication between the apparatus 700 and another device.

For example, in an embodiment, the communication unit 703 is configured to: receive a random access preamble from a terminal, where a number of repetitions of the preamble is a first number of repetitions; send first information to the terminal, where the first information indicates a first parameter for repeatedly sending a first uplink message; and receive the first uplink message based on the first parameter, where the first parameter corresponds to the first number of repetitions.

In a possible design, the communication unit 703 is further configured to send first configuration information to the terminal, where the first configuration information is used for configuring M candidate parameters that correspond to the first number of repetitions and that are for repeatedly sending the uplink message, and M is a positive integer, where that the first information indicates the first parameter includes: The first information is used for determining the first parameter from the M candidate parameters.

In a possible design, the first information is carried in a response message.

In a possible design, the first configuration information is further used for configuring N candidate parameters that correspond to a second number of repetitions of the preamble and that are for repeatedly sending the uplink message, the N candidate parameters are different from the M candidate parameters, and N is a positive integer.

In a possible design, the communication unit 703 is further configured to: send second configuration information to the terminal, where the second configuration information is used for configuring W candidate parameters for repeatedly sending the uplink message; and send second information to the terminal, where the second information is used for determining M candidate parameters from the W candidate parameters; and that the first information indicates the first parameter includes: The first information is used for determining the first parameter from the M candidate parameters, where W and M are both positive integers.

In a possible design, the first information is carried in a response message, the second information is carried in the response message or a physical downlink control channel PDCCH command, and the PDCCH command is used for triggering repeated sending of the random access preamble to the network device.

In a possible design, the communication unit 703 is further configured to send the PDCCH command to the terminal, where the PDCCH command indicates the first number of repetitions.

In a possible design, the first parameter includes a number of repetitions of the first uplink message and a modulation and coding scheme MCS.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation procedure, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

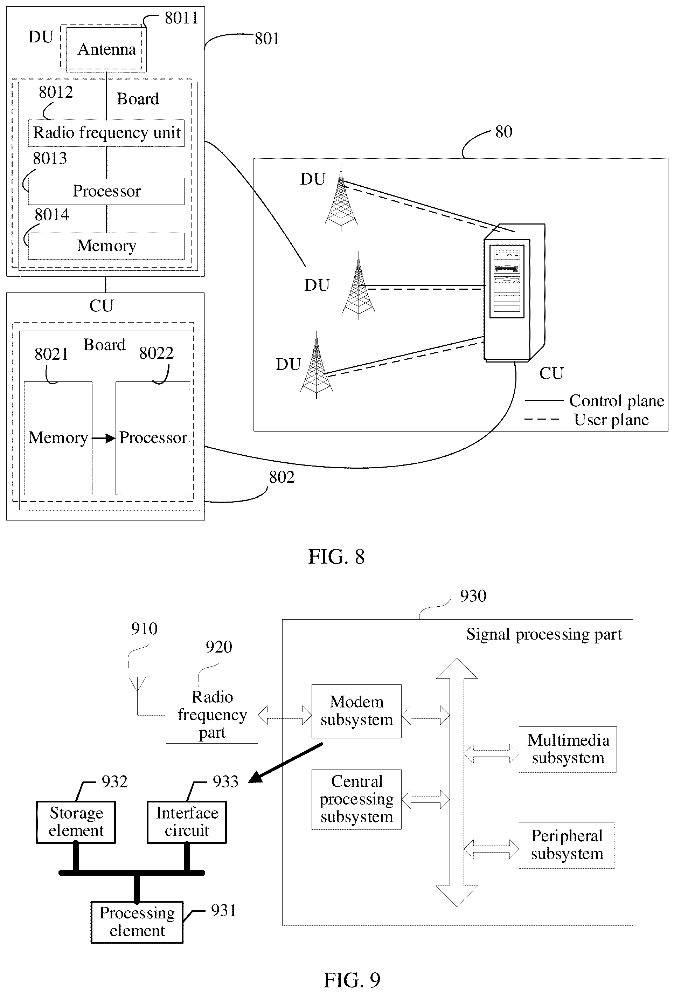

FIG. 8 is a diagram of a structure of a network device according to an embodiment of this application. The network device (or a base station) may be used in the communication system shown in FIG. 1, to perform functions of the network device in the foregoing method embodiments. As shown in FIG. 8, the network device 80 may include one or more DUs 801 and one or more CUs 802. The DU 801 may include at least one antenna 8011, at least one radio frequency unit 8012, at least one processor 8013, and at least one memory 8014. The DU 801 is mainly configured to receive a radio frequency signal and send a radio frequency signal, perform conversion between a radio frequency signal and a baseband signal, and perform partial baseband processing. The CU 802 may include at least one processor 8022 and at least one memory 8021.

The CU 802 is mainly configured to: perform baseband processing, control the network device, and so on. The DU 801 and the CU 802 may be physically arranged together, or may be physically arranged separately, that is, a distributed base station. The CU 802 is a control center of the network device, may also be referred to as a processing unit, and is mainly configured to complete a baseband processing function. For example, the CU 802 may be configured to control the network device to perform an operation process related to the network device in the foregoing method embodiments.

In addition, optionally, the network device 80 may include one or more radio frequency units, one or more DUs, and one or more CUs. The DU may include at least one processor 8013 and at least one memory 8014, the radio frequency unit may include at least one antenna 8011 and at least one radio frequency unit 8012, and the CU may include at least one processor 8022 and at least one memory 8021.

In an example, the CU 802 may include one or more boards. A plurality of boards may jointly support a radio access network (for example, a 5G network) with a single access indication, or may separately support radio access networks (for example, an LTE network, a 5G network, or another network) of different access standards. The memory 8021 and the processor 8022 may serve the one or more boards. In other words, a memory and a processor may be disposed on each board. Alternatively, a plurality of boards may share a same memory and a same processor. In addition, a necessary circuit may further be disposed on each board. The DU 801 may include one or more boards. A plurality of boards may jointly support a radio access network (for example, a 5G network) with a single access indication, or may separately support radio access networks (for example, an LTE network, a 5G network, or another network) of different access standards. The memory 8014 and the processor 8013 may serve the one or more boards. In other words, a memory and a processor may be disposed on each board. Alternatively, a plurality of boards may share a same memory and a same processor. In addition, a necessary circuit may further be disposed on each board.

The network device shown in FIG. 8 can implement procedures related to the network device in the foregoing method embodiments. Operations and/or functions of modules in the network device shown in FIG. 8 are respectively used to implement corresponding processes in the foregoing method embodiments. For details, refer to the descriptions in the foregoing method embodiments. To avoid repetition, detailed descriptions are properly omitted herein.

FIG. 9 is a diagram of a structure of a terminal according to an embodiment of this application. The terminal may be used in the communication system shown in FIG. 1, to implement operations of the terminal in the foregoing embodiments. As shown in FIG. 9, the terminal includes an antenna 910, a radio frequency part 920, and a signal processing part 930. The antenna 910 is connected to the radio frequency part 920. In a downlink direction, the radio frequency part 920 receives, through the antenna 910, information sent by a network device, and sends, to the signal processing part 930 for processing, the information sent by the network device. In an uplink direction, the signal processing part 930 processes information from the terminal, and sends the information to the radio frequency part 920. The radio frequency part 920 processes the information from the terminal, and then sends processed information to the network device through the antenna 910.

The signal processing part 930 may include a modem subsystem, configured to process data at each communication protocol layer, and may further include a central processing subsystem, configured to implement processing at an operating system layer and an application layer of the terminal. In addition, the signal processing part 930 may further include another subsystem, for example, a multimedia subsystem or a peripheral subsystem. The multimedia subsystem is configured to control a camera, a screen display, or the like of the terminal. The peripheral subsystem is configured to implement a connection to another device. The modem subsystem may be a separately disposed chip.

The modem subsystem may include one or more processing elements 931, for example, include one main control CPU and another integrated circuit. In addition, the modem subsystem may further include a storage element 932 and an interface circuit 933. The storage element 932 is configured to store data and a program. However, the program used to perform the method performed by the terminal in the foregoing methods may not be stored in the storage element 932, but is stored in a memory outside the modem subsystem, and is loaded and used by the modem subsystem when to be used. The interface circuit 933 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, that is, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of a SoC, and the SoC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processor element. Certainly, some or all steps performed by the terminal may alternatively be performed by combining the first manner and the second manner.

The processing element herein is the same as that described above, and may be implemented by a processor. A function of the processing element may be the same as a function of the processing unit described in FIG. 7. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by a memory, and a function of the storage element may be the same as a function of the storage unit described in FIG. 7. The storage element may be a memory, or may be a collective name of a plurality of memories.

The terminal shown in FIG. 9 can implement procedures related to the terminal in the foregoing method embodiments. Operations and/or functions of modules in the terminal shown in FIG. 9 are respectively used to implement corresponding processes in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used for distinguishing between a plurality of objects, instead of limiting an order, a time sequence, a priority, or importance of the plurality of objects.

A person skilled in the art should understand that embodiments of this application may be provided as a method, a system, or a computer program product. Therefore, this application may use the form of hardware only embodiments, software only embodiments, or embodiments with a combination of software and hardware. Moreover, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that an apparatus configured to implement a specific function in one or more processes in the flowcharts and/or in one or more blocks in the block diagrams is generated by using instructions executed by a computer or the processor of any other programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A communication method, wherein the method comprises:
repeatedly sending a random access preamble to a network device, wherein a number of repetitions of the preamble is a first number of repetitions;
receiving a response message for the preamble from the network device; and
repeatedly sending a first uplink message to the network device based on the response message, wherein
a first parameter for repeatedly sending the first uplink message corresponds to the first number of repetitions.

2. The method according to claim 1, wherein the method further comprises:
receiving first configuration information from the network device, wherein the first configuration information is used for configuring M candidate parameters that correspond to the first number of repetitions and that are for repeatedly sending the uplink message, and M is a positive integer; and
receiving first information from the network device, wherein the first information is used for determining the first parameter from the M candidate parameters.

3. The method according to claim 2, wherein repeatedly sending the random access preamble to the network device comprises:
receiving a PDCCH command from the network device, wherein the PDCCH command indicates the first number of repetitions; and sending the preamble to the network device based on the first number of repetitions indicated by the PDCCH command; or
receiving a downlink signal from the network device, and when signal quality of the downlink signal is within a threshold range corresponding to the first number of repetitions, repeatedly sending the preamble to the network device based on the first number of repetitions.

4. The method according to claim 2 or 3, wherein the first information is carried in the response message.

5. The method according to any one of claims 2 to 4, wherein the first configuration information is further used for configuring N candidate parameters that correspond to a second number of repetitions of the preamble and that are for repeatedly sending the uplink message, the N candidate parameters are different from the M candidate parameters, and N is a positive integer.

6. The method according to claim 1, wherein the method further comprises:
receiving second configuration information from the network device, wherein the second configuration information is used for configuring W candidate parameters for repeatedly sending the uplink message; and
receiving first information and second information from the network device, wherein the second information is used for determining M candidate parameters from the W candidate parameters, and the first information is used for determining the first parameter from the M candidate parameters, wherein
W and M are both positive integers.

7. The method according to claim 6, wherein the first information is carried in the response message, the second information is carried in the response message or a physical downlink control channel PDCCH command, and the PDCCH command is used for triggering repeated sending of the random access preamble to the network device.

8. The method according to claim 7, wherein the PDCCH command further indicates the first number of repetitions.

9. The method according to any one of claims 1 to 8, wherein repeatedly sending the random access preamble to the network device comprises:
repeatedly sending the preamble to the network device on a same beam.

10. The method according to any one of claims 1 to 9, wherein the first parameter comprises a number of repetitions of the first uplink message and a modulation and coding scheme MCS.

11. A communication method, wherein the method comprises:
receiving a random access preamble from a terminal, wherein a number of repetitions of the preamble is a first number of repetitions;
sending first information to the terminal, wherein the first information indicates a first parameter for repeatedly sending a first uplink message; and
receiving the first uplink message based on the first parameter, wherein
the first parameter corresponds to the first number of repetitions.

12. The method according to claim 11, wherein the method further comprises:
sending first configuration information to the terminal, wherein the first configuration information is used for configuring M candidate parameters that correspond to the first number of repetitions and that are for repeatedly sending the uplink message, and M is a positive integer, wherein
that the first information indicates the first parameter comprises: the first information is used for determining the first parameter from the M candidate parameters.

13. The method according to claim 12, wherein the first information is carried in the response message.

14. The method according to claim 12, wherein the first configuration information is further used for configuring N candidate parameters that correspond to a second number of repetitions of the preamble and that are for repeatedly sending the uplink message, the N candidate parameters are different from the M candidate parameters, and N is a positive integer.

15. The method according to claim 11, wherein the method further comprises: sending second configuration information to the terminal, wherein the second configuration information is used for configuring W candidate parameters for repeatedly sending the uplink message; and sending second information to the terminal, wherein the second information is used for determining M candidate parameters from the W candidate parameters, and W and M are both positive integers, wherein
that the first information indicates the first parameter comprises: the first information is used for determining the first parameter from the M candidate parameters.

16. The method according to claim 15, wherein the first information is carried in the response message, the second information is carried in the response message or a PDCCH command, and the PDCCH command is used for triggering repeated sending of the random access preamble to a network device.

17. The method according to any one of claims 11 to 16, wherein the method further comprises:
sending the PDCCH command to the terminal, wherein the PDCCH command indicates the first number of repetitions.

18. The method according to any one of claims 11 to 17, wherein the first parameter comprises a number of repetitions of the first uplink message and a modulation and coding scheme MCS.

19. A communication apparatus, comprising a module configured to perform the method according to any one of claims 1 to 18.

20. A communication apparatus, comprising a processor, wherein the processor is coupled to a memory, the memory stores a computer program, and the processor is configured to invoke the computer program in the memory, to cause the communication apparatus to perform the method according to any one of claims 1 to 18.

21. A communication system, wherein the communication system comprises a network device and a terminal, the terminal is configured to perform the method according to any one of claims 1 to 10, and the network device is configured to perform the method according to any one of claims 11 to 18.

22. A computer-readable storage medium, wherein the storage medium stores a computer program or instructions, and when the computer program or the instructions are executed by a computer, the method according to any one of claims 1 to 18 is implemented.

23. A computer program product, wherein when a computer reads and executes the computer program product, the computer is caused to perform the method according to any one of claims 1 to 18.
